# EUROPEAN PATENT APPLICATION

(11) **EP 4 726 140 A1**
(43) Date of publication of application: **15.04.2026**
(21) Application number: 25791534.8
(22) Date of filing: 14.08.2025
(51) Int. Cl.: E04F 15/02

(54) **PREPARATION METHOD FOR REINFORCED FILM-COATED FLOOR**

(30) Priority: 20.08.2024 CN 202411144653
(71) Applicant: Anhui Sentai Wpc-Tec Flooring Co., Ltd., Xuancheng, Anhui 242200 (CN)
(72) Inventor: HUANG, Donghui, Xuancheng, Anhui 242200 (CN); TANG, Daoyuan, Xuancheng, Anhui 242200 (CN)
(74) Representative: Garavelli, Paolo
(86) International application number: PCT/CN2025/114573
(87) International publication number: WO 2026/040891

(57) **Abstract**

The present invention relates to a method for preparing an enhanced film-coated flooring, belonging to the technical field of wood-plastic flooring. The present invention reduces the consumption of UV-curable resin and thereby achieves lower production costs by bonding a pre-formed wear-resistant layer to the outer surface of the thermoplastic shell.

## Description

### Technical Field

The present invention relates to a method for preparing film-coated flooring, and belongs to the technical field of film-coated flooring.

### Background

The conventional production process of wood-plastic flooring typically involves extruding a mixture of wood-plastic raw materials through an extruder and mold to form a base board, followed by using patterned rollers to press wood grain textures onto the base board. However, the wood grain patterns formed in this way are not only monotonous in style but also lack realism.

To improve the simulation of wood grain, targeted research and development have been carried out in the industry. The patent document with publication number CN109653465A discloses a production method for a PVC decorative board with a 3D effect. The steps include: coating a UV primer on the upper surface of a PVC board substrate and curing it by irradiation; coating a UV white paint and curing it by irradiation; printing a pattern; coating a UV wear-resistant paint and curing it by irradiation; printing a concave-convex effect layer and curing it by irradiation; and coating a UV topcoat and curing it by irradiation.

### SUMMARY OF THE INVENTION

### Technical Problem

While 3D printing technology can enhance the simulation of wood grain, the production of such flooring relies on expensive production lines and requires the application of large amounts of UV resin, making it difficult to reduce material costs. In addition, flooring installed using a joist system needs to have a high Young's Modulus; otherwise, it is prone to bending and deformation during use, which significantly affects user experience.

### Technical Solutions

The present invention provides a method for preparing an enhanced film-coated flooring, intending to solve the above-mentioned technical problems.

The technical solutions of the present disclosure to solve the above-mentioned problems are as follows:
a method for preparing an enhanced film-coated flooring, wherein the enhanced film-coated flooring comprises:
a substrate, comprising:
a foamed core formed from foam plastic,
a thermoplastic shell covering the foamed core, and
a layered reinforcement body disposed between the foamed core and the thermoplastic shell;
a decorative layer, covering the substrate, comprising:
   an adhesive primer layer and
   a pattern layer disposed on the adhesive primer layer;
   a pre-formed wear-resistant layer, covering the decorative layer for protective purposes;
   a first adhesive layer, disposed between the decorative layer and the pre-formed wear-resistant layer, having a molecular structure with repeating urethane chain segments;
   characterized in that the preparation method comprises the following steps:
      S1: Providing the substrate and the pre-formed wear-resistant layer;
      S2: Applying a cleaning agent on the surface of the substrate to treat lubricating wax on the substrate surface, followed by corona treatment;
      S3: Applying the adhesive primer layer on the surface of the substrate, printing a pattern on the adhesive primer layer using an industrial printer to form the decorative layer;
      S4: Performing corona treatment on the wear-resistant layer, with the dyne level controlled to be above 50;
      S5: Applying the first adhesive layer on the decorative layer, or on the back surface of the wear-resistant layer, and then thermally pressing the substrate and the wear-resistant layer (3) together;
      S6: Allowing the assembly to stand for more than 36 hours.

The main conceptual aspects of the above technical solution are as follows:
First, by integrating a layered reinforcement body within the substrate, and combining the lightweight properties of the foamed core, the significant enhancement in Young's modulus provided by the layered reinforcement body, and the encapsulating effect of the thermoplastic shell, a lightweight, high-strength, and structurally stable substrate is constructed.
Second, the innovative use of a pre-formed wear-resistant layer to directly cover the decorative layer replaces the conventional process, which involves extensive application of UV-curable wear-resistant layers that are prone to shrinkage during curing. This avoids product warping and significantly reduces production costs.

The enhanced film-coated flooring prepared using this technical solution achieves performance breakthroughs through a multi-layer collaborative design: the foamed main provides a lightweight foundation; the layered reinforcement body precisely enhances the substrate's rigidity; and the thermoplastic shell provides overall encapsulation and basic protection. The decorative layer consists of an adhesive primer layer and a pattern layer printed via industrial printing, wherein the adhesive primer layer enhances the bonding strength and hiding power of the pattern layer, and the pattern layer provides diverse decorative effects. The pre-formed wear-resistant layer on the surface directly undertakes key protective functions such as scratch and wear resistance.

The functional layers are reliably bonded by a first adhesive layer whose molecular structure contains repeating urethane segments and are securely laminated through a thermal pressing process. This adhesive layer can be applied either to the decorative layer or to the wear-resistant layer.

During preparation, targeted cleaning of the substrate and wear-resistant layer removes surface lubricating wax. Corona treatment is then performed, with the dyne levels of both the substrate and the wear-resistant layer controlled to be ≥50, to optimize interfacial bonding. A pattern is printed on the adhesive primer layer using an industrial printer to form the decorative layer. The first adhesive layer, with repeating urethane segments in its molecular structure, is applied. Finally, the layers are securely laminated via thermal pressing, followed by curing for over 36 hours.

This approach combines structural design (lightweight, high-strength substrate and pre-formed wear-resistant layer) with process optimization (corona treatment, compatible adhesive, and thermal pressing). This significantly enhances the flooring's mechanical strength, decorative appeal, wear resistance, durability, and cost-effectiveness, addressing the technical challenge of balancing cost control and performance in traditional film-coated flooring.

During R&D, the inventors initially used thermal transfer technology to transfer patterns onto a carrier film, as it was a more mature process with lower equipment requirements. To improve transfer effectiveness, an adhesive needed to be applied to the carrier film.

However, subsequent peeling of the carrier film proved very difficult, and incomplete removal often led to defective products. If the curing time was controlled within 10 hours, the carrier film could be peeled easily, but this resulted in a significant reduction in the adhesive strength between the transferred pattern and the carrier film. The inventors attributed this to the destruction of the initial tack of the adhesive layer during peeling. Consequently, the transfer method was abandoned in favor of direct printing.

Preferably, the cleaning agent is dichloromethane.

Preferably, the pre-formed wear-resistant layer is selected from one of PET, PETG, ASA, PC, and PMMA, or a mixed resin formed from any of these resins.

Preferably, in step S3, the adhesive primer layer is applied in a staged manner: the first application is 8~15 g/m², followed by curing, then a second application, with a total application amount of 25~50 g/m².

Further preferably, the first-applied primer does not contain titanium dioxide, while the second-applied primer contains titanium dioxide for hiding power.

Even more preferably, the first-applied primer comprises, by mass: 85% acrylate, 3.5% photoinitiator 184, 1.5% photoinitiator TPO, 10.0% reactive diluent (hydroxyethyl acrylate). The second-applied primer comprises, by mass: 75% acrylate, 3.5% photoinitiator 184, 1.5% photoinitiator TPO, 10.0% reactive diluent (hydroxyethyl acrylate), and 10% titanium dioxide.

Preferably, the base resin of the foamed core and the thermoplastic shell is polyolefin/polyvinyl chloride.

Preferably, the layered reinforcement body is formed by impregnating a reinforcing fiber mesh fabric with resin.

Another objective of the present invention is to provide another method for preparing the enhanced film-coated flooring, as follows:
a method for preparing the enhanced film-coated flooring, wherein the enhanced film-coated flooring comprises:
a substrate, comprising:
a foamed core formed from foam plastic,
a thermoplastic shell covering the foamed core, and
a layered reinforcement body disposed between the foamed core and the thermoplastic shell;
a decorative layer, covering the substrate;
a pre-formed wear-resistant layer, covering the decorative layer for protection;
a first adhesive layer, disposed between the decorative layer and the pre-formed wear-resistant layer, having repeating urethane chain segments;
the decorative layer comprises a pre-formed carrier film and a pattern layer disposed on the pre-formed carrier film, wherein the pre-formed carrier film is connected to the substrate via a second adhesive layer;
the preparation method comprises the steps:
   S1: Providing the substrate and the pre-formed wear-resistant layer;
   S2: Applying a cleaning agent on the substrate surface to treat lubricating wax, followed by corona treatment;
   S3: Providing a pre-formed carrier film, performing corona treatment on both sides of the film, controlling the dyne level to be above 46;
   S4: Using an industrial printer to print a pattern on the carrier film to form the decorative layer;
   S5: Applying a second adhesive layer on the substrate or on the back surface of the decorative layer, then thermally pressing the decorative layer and the substrate together;
   S6: Allowing the product to stand for more than 16 hours;
   S7: Performing corona treatment on the pre-formed wear-resistant layer, controlling the dyne level to be above 50;
   S8: Applying a first adhesive layer on the decorative layer or on the back surface of the wear-resistant layer, then thermally pressing the substrate and the wear-resistant layer together;
   S9: Allowing the assembly to stand for more than 36 hours.

The products prepared by the two methods differ slightly in structure. The primary difference lies in: for the first method, when forming the pattern layer on the substrate, a primer is applied to enhance adhesion between the pattern and the substrate. As the primer is beneath the pattern layer, it may be colored-for instance, containing a small amount of titanium dioxide to create a white background, thereby concealing the substrate and eliminating batch-to-batch color variation. For the second method, a vivid pattern is printed on the surface of a pre-formed carrier film using a flatbed inkjet printer to create a colored film. The pattern layer is then bonded to the wear-resistant layer via the first adhesive layer applied either to the pattern side or to the wear-resistant layer. Finally, the pattern layer is bonded to the substrate via the second adhesive layer applied either to the back of the colored film or to the substrate.

In both cases, a UV protective layer may be further added on the pattern layer to protect the pattern and enhance bonding with the wear-resistant layer.

Preferably, the cleaning agent is dichloromethane.

During R&D, the inventors found that the second adhesive layer often cracked. Initially, they sanded and corona-treated the substrate, which improved the situation significantly, but cracking still occurred occasionally. Analysis suggested it was due to oil exudation from the thermoplastic shell. Oil exudation refers to processing aids such as polyethylene wax and stearates added to facilitate molding and extrusion, which gradually leach out over time and accumulate at the interface between the thermoplastic shell and the second adhesive layer. These substances, having poor adhesion, can cause cracking of the second adhesive layer when they accumulate.

In the present solution, spraying dichloromethane on the substrate surface and wiping it clean effectively removes hard-to-see accumulations of processing aids. Then, sanding and corona treatment of the thermoplastic shell are performed: sanding increases surface roughness for better micro-contact area, and corona treatment causes partial breakage of plastic molecular bonds, generating polar groups like carbonyl and hydroxyl, thereby enhancing surface adhesion and ensuring strong bonding between the pattern layer and the substrate, preventing cracking of the second adhesive layer.

Preferably, the pre-formed wear-resistant layer is selected from PET, PETG, ASA, PC, PMMA, or a mixed resin thereof.

More preferably, the pre-formed wear-resistant layer is a PMMA film.

PMMA offers advantages such as high hardness, wear resistance, and resistance to yellowing.

Preferably, the base resin of the foamed core and the thermoplastic shell is polyolefin/polyvinyl chloride.

Preferably, the layered reinforcement body is formed by impregnating a reinforcing fiber mesh fabric with resin.

Since the substrate of the present invention also includes a layered reinforcement body and a thermoplastic shell, the production process of the foamed core is integrated with other processes.

Preferably, the substrate 1 is prepared by the following steps:
1) Extruding raw materials containing base resin through a main extruder into the main channel of a mold to form a pressurized core;
2) Feeding the layered reinforcement body into the reinforcement channel of the mold;
3) Feeding resin raw materials for the thermoplastic shell through an auxiliary extruder into the co-extrusion channel of a co-extrusion mold; extruding the resin to form a frame-shaped thermoplastic shell;
4) Extruding the pressurized core, layered reinforcement body, and thermoplastic shell from their respective independent channels to form a blank; simultaneously transferring the blank into a setting mold, where the pressurized core foams within the constrained thermoplastic shell, filling it completely, while the blank undergoes composite formation and cooling setting in the setting mold to obtain the substrate.

Regarding how to embed the layered reinforcement body into the substrate, the conventional approach is to connect the reinforcement channel with the main channel so that the reinforcement body merges with the foamed layer and is extruded together.

However, this causes issues: the high pressure inside the main channel causes reverse pressure release through the reinforcement channel, pushing material from the main channel into the reinforcement channel, potentially causing foaming and blocking the channel, interrupting the input of the reinforcement body and halting production. Typically, molds need to be disassembled frequently to clear the reinforcement channel. Moreover, premature foaming in certain areas due to pressure relief makes it difficult to control the quality of the foamed core. Even with check valves at the outlet of the reinforcement channel, these issues cannot be entirely prevented.

The present solution addresses these issues by modifying the production method and mold design:
Mold design:
   The main channel is designed for pressure retention throughout the mold;
   The reinforcement channel, co-extrusion channel, and main channel are independent and converge at the exit of the mold;
   A setting mold is installed at the mold exit.
Methodology:
   Abandoning the previous concept of forming a composite board directly at the mold exit;
   Abandoning the idea of using molten thermoplastic shell material to cover a pre-formed foamed core, instead using a pre-formed thermoplastic shell and filling it with a foamed core that is yet to foam, inserting the layered reinforcement body before filling. Specifically, filling is achieved not by continuously supplying filler material, but by utilizing the automatic foaming expansion of the pressurized core exiting the pressurized main channel. Therefore, after the blank is extruded from the mold, it must immediately enter the setting mold, where the thermoplastic shell is constrained, allowing the pressurized core to foam within the constrained shell and fill it completely. The setting mold may also be placed in a water tank to enhance cooling and setting.

In summary, the present invention has the following beneficial effects:
By incorporating a layered reinforcement body within the substrate, the flooring's compressive strength and elastic modulus are increased, enabling wider installation spans, reduced use of joists, lower installation costs, and higher efficiency.

The layered reinforcement body reduces the thermal shrinkage rate of the flooring, eliminating the need for a balancing layer.

The use of a pre-formed wear-resistant layer on the thermoplastic shell reduces the amount of UV-curable resin, lowering production costs.

The use of a PMMA-based wear-resistant layer provides advantages such as high hardness, wear resistance, and resistance to yellowing.

### Brief Description of Drawings

Figure 1 is a schematic structural diagram of the enhanced film-coated flooring.
Figure 2 is a schematic diagram of the surface layer structure of Example 1.
Figure 3 is a schematic diagram of the surface layer structure of Example 2.

### In the figures:

1 - Substrate, 2 - Decorative layer, 3 - Wear-resistant layer;
11 - Foamed core, 12 - Layered reinforcement body, 13 - Thermoplastic shell;
21 - Adhesive primer layer, 21' - Pre-formed carrier film, 22 - Pattern layer;
201 - First adhesive layer, 202 - Second adhesive layer.

### Best Mode for Carrying Out the Invention

### Example 1

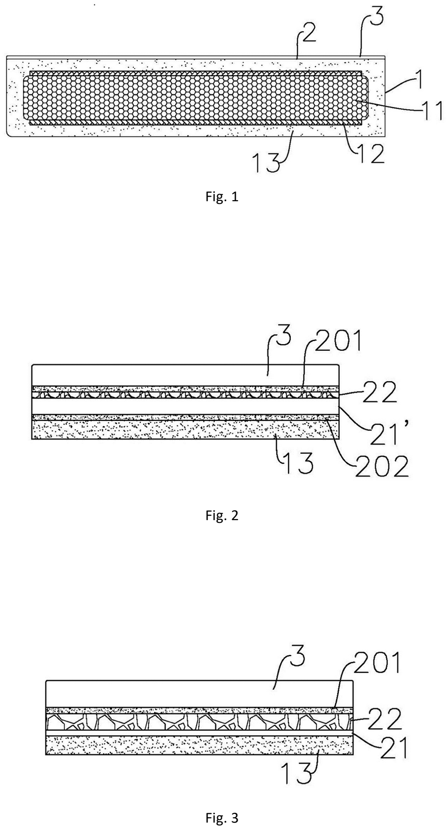

As shown in Figures 1~2, an enhanced film-coated flooring includes a substrate 1, a decorative layer 2, and a pre-formed wear-resistant layer 3 arranged in sequence; a first adhesive layer 201 is disposed between the decorative layer 2 and the wear-resistant layer 3, and a second adhesive layer 202 is disposed between the decorative layer 2 and the substrate 1. The decorative layer 2 is formed by disposing a pattern layer 22 on a pre-formed carrier film 21'.

The substrate 1 is resin-based and, as shown in Figure 1, includes a foamed core 11, a layered reinforcement body 12, and a thermoplastic shell 13. The thermoplastic shell 13 covers the foamed core 11, and the layered reinforcement body 12 is disposed between the foamed core 11 and the thermoplastic shell 13.

Specifically, the foamed core 11 is a PVC foam product with a density of about 0.8 g/m³.

The layered reinforcement body 12 is a glass fiber mesh fabric impregnated with ABS.

The thermoplastic shell 13 is non-foamed or low-foamed PVC.

In this example, the pre-formed carrier film 21' is a white PVC film.

The preparation method is as follows:
S1: Providing the substrate and the pre-formed wear-resistant layer (a PMMA sheet, ~0.5 mm thick);
S2: Applying dichloromethane to the substrate surface and then wiping it clean with a cleaning cloth;
S3: Providing a white PVC film, corona-treating both sides to a dyne level of 46;
S4: Printing a pattern on the white PVC film using a flatbed inkjet printer and curing it to produce a patterned PVC film; the pattern layer is formed by curing a water-based color paste (approximately 30 mL/ m²) ;
S5: Applying a polyurethane hot-melt adhesive to the non-printed side of the PVC film, and then thermally pressing the decorative layer and the substrate together;
S6: Allowing to stand for 16 hours;
S7: Corona-treating the wear-resistant layer to a dyne level of 50;
S8: Applying a polyurethane hot-melt adhesive to the corona-treated surface of the wear-resistant layer, and then thermally pressing the substrate and the wear-resistant layer together;
S9: Allowing to stand for 36 hours.

The substrate 1 is prepared by the following method:
Extruding raw materials containing resin through a main extruder into the main channel of a mold to form a pressurized core;
Feeding the layered reinforcement body into the reinforcement channel of the mold;
Feeding resin for the thermoplastic shell through an auxiliary extruder into the co-extrusion channel of a co-extrusion mold; extruding to form a frame-shaped thermoplastic shell;
Extruding the pressurized core, layered reinforcement body, and thermoplastic shell from their respective channels to form a blank; simultaneously transferring the blank into a setting mold, where the pressurized core foams within the constrained thermoplastic shell, filling it, while the blank is composite-formed and cooled in the setting mold to obtain the substrate.

A co-extrusion mold used for preparing the aforementioned flooring comprises the following structures:
The co-extrusion mold is provided with a main channel, a reinforcement material channel, and a co-extrusion channel;
The main channel, the reinforcement material channel, and the co-extrusion channel are independent of each other within the mold and converge at the outlet of the co-extrusion mold;
The reinforcement material channel includes a first channel and a second channel, which are respectively located on the two sides of the main channel;
The first channel has a linear (straight-line) first outlet, and the second channel has a linear second outlet;
The outlet of the co-extrusion channel has a rectangular ring structure and is arranged around the outlet of the main channel. Moreover, the first outlet is positioned between the upper edge of the main channel outlet and the upper edge of the co-extrusion channel outlet, and the second outlet is positioned between the lower edge of the main channel outlet and the lower edge of the co-extrusion channel outlet.

### Implementation Modes of the Invention

### Example 2

As shown in Figures 1 and 3, an enhanced film-coated flooring comprises a substrate 1, a decorative layer 2, and a pre-formed wear-resistant layer 3; wherein a first adhesive layer 201 is arranged between the pattern layer 2 and the wear-resistant layer 3.

The substrate 1 is resin-based. As shown in Figure 1, it comprises a foamed core 11, a layered reinforcement body 12, and a thermoplastic shell 13. The thermoplastic shell 13 covers the foamed core 11, and the layered reinforcement body 12 is arranged between the foamed core 11 and the thermoplastic shell 13. An adhesive primer layer 21 is provided on the decorative surface of the substrate 1.

Specifically, the foamed core 11 is a PVC foamed product with a density of approximately 0.8 g/m³.

The layered reinforcement body 12 is a glass fiber mesh fabric impregnated with ABS (acrylonitrile-butadiene-styrene).

The thermoplastic shell 13 is a non-foamed or low-foamed PVC.

The preparation method of the aforementioned film-coated flooring is as follows:
S1: Providing the substrate and the pre-formed wear-resistant layer, wherein the wear-resistant layer is a PMMA (polymethyl methacrylate) sheet with a thickness of approximately 0.5 mm;
S2: Applying dichloromethane to the surface of the substrate to treat substances such as lubricating wax on the substrate surface, then wiping it clean with a cleaning cloth, followed by corona treatment;
S3: Applying the adhesive primer layer on the surface of the substrate and curing it by irradiation; the primer formulation is: 75% acrylate, 3.5% photoinitiator 184, 1.5% photoinitiator TPO, 10.0% diluent (hydroxyethyl acrylate), 10% titanium dioxide; the application amount is 10 g/m²;
S4: Printing a pattern on the adhesive primer layer using an industrial printer to form a pattern layer, and curing the pattern layer; the pattern layer is formed by curing a water-based color paste, with an application amount of approximately 30 mL/ m²;
S5: Performing corona treatment on the wear-resistant layer, controlling the dyne level to be above 50;
S6: Applying polyurethane hot-melt adhesive to the corona-treated surface of the wear-resistant layer, and then thermally pressing the substrate and the wear-resistant layer together;
S7: Allowing the assembly to stand for 36 hours.

### Comparative Example 1

A foamed flooring with wood grain texture is produced according to the method described in Patent Document CN 110670839B.

In accordance with the relevant content of standard BS EN 15534-1-2014+A1-2017, tests are conducted on the products of Example 1, Example 2, and Comparative Example 1 to determine their bending failure load, bending strength, bending elastic modulus, and thermal shrinkage. The test results are shown in Table 1.

**Table 1 Comparison of Product Performance Between Examples and Comparative Example**

| Inspection Items | | Unit | Test | Test | Test | Test Results | | |
|---|---|---|---|---|---|---|---|---|
| | | | method | require ments | conditions | Example 1 | Example 2 | Comparative Example 3 |
| Bending test by means of three-point loading | maximum load | N | BSEN1 5534-1-2014+ A1-2017 | ≥7500 | Span : 300mm | 12760 | 12909 | 6418 |
| | flexural strength | MPa | | ≥40 | Temperat ure : 23°C | 69.74 | 70.13 | 43.9 |
| | flexural modulus | MPa | | ≥2000 | | 2991 | 3012 | 2009 |
| | maximum load | N | | ≥5000 | Span : 300mm | 6973 | 6989 | 2608 |
| | flexural strength | MPa | | ≥30 | Temperat ure: 75°C | 39.5 | 39.6 | 15.1 |
| | flexural modulus | MPa | | ≥1000 | | 1517 | 1508 | 602 |
| thermal shrinkage | | % | | ≤-1.4 | 100°C,1h | -0.16 | -0.16 | -9.6 |

As can be seen from Table 1, in the three-point bending test, whether under normal temperature conditions at 23 °C or high-temperature conditions at 75 °C, the bending failure load, bending strength, and bending elastic modulus of both Example 1 and Example 2 far exceed the corresponding test requirements and are significantly better than those of Comparative Example 1. This indicates that measures such as the incorporation of a layered reinforcement body can effectively enhance the mechanical strength and deformation resistance of the flooring.

In the thermal shrinkage test (100 °C, 1 hour), the thermal shrinkage rates of Example 1 and Example 2 are extremely low and meet the requirements, whereas the thermal shrinkage rate of Comparative Example 1 far exceeds the standard limit. This demonstrates that designs such as the use of a pre-formed wear-resistant layer can significantly improve the dimensional stability of the flooring at elevated temperatures.

Overall, the flooring prepared by the technical solution of the present invention exhibits superior mechanical properties and dimensional stability compared to traditional solutions.

The following describes the wear resistance test and immersion delamination test conducted on Example 1 and Example 2.

The wear resistance test is carried out in accordance with EN 660-2, calculating the mass loss per 100 cycles.

The immersion test is performed in accordance with GB/T 17657-2013.

The results of the wear resistance test are shown in Table 2. The results of the immersion delamination test are shown in Table 3.

**Table 2 Wear Resistance Test Results of the Examples**

| | Thickness of the wear-resistant layer (mm) | Mass Loss of the wear-resistant layer (mg/100r) |
|---|---|---|
| Example 1 | 0.5 | 55 |
| Example 2 | 0.5 | 55 |

**Table 3 Immersion Delamination Test Results of the Examples**

| | Delamination length after immersion test (mm) |
|---|---|
| Example 1 | 0 |
| Example 2 | 0 |

As can be seen from Table 2, during the wear resistance test, both Example 1 and Example 2 had a film thickness of 0.5 mm and a mass loss of 55 mg per 100 cycles, indicating that both exhibit good and consistent surface wear resistance. The pre-formed wear-resistant layer can effectively resist frictional wear.

From Table 3, it can be observed that in the immersion delamination test, both Example 1 and Example 2 had an immersion delamination value of 0 mm, demonstrating that the bonding between the various layers of the flooring is strong and that they possess excellent resistance to immersion delamination. Overall, this reflects that the flooring prepared by the technical solution of the present invention exhibits outstanding performance in terms of wear resistance and interlayer adhesion.

## Claims

1. A method for preparing an enhanced film-coated flooring, wherein the enhanced film-coated flooring comprises:
a substrate (1), comprising:
a foamed core (11) formed from foam plastic,
a thermoplastic shell (13) covering the foamed core, and
a layered reinforcement body (12) disposed between the foamed core (11) and the thermoplastic shell (13);
a decorative layer (2), covering the substrate, comprising:
an adhesive primer layer (21), and
a pattern layer (22) disposed on the adhesive primer layer;
a pre-formed wear-resistant layer (3), covering the decorative layer for protective purposes;
a first adhesive layer (201), disposed between the decorative layer and the pre-formed wear-resistant layer, having a molecular structure with repeating urethane segments;
**characterized in that** the preparation method comprises the following steps:
S1: Providing the substrate (1) and the pre-formed wear-resistant layer (3);
S2: Applying a cleaning agent on the surface of the substrate (1) to treat lubricating wax on the substrate surface, followed by corona treatment;
S3: Applying the adhesive primer layer (21) on the surface of the substrate (1), printing a pattern on the adhesive primer layer using an industrial printer to form the decorative layer (2);
S4: Performing corona treatment on the wear-resistant layer (3), with the dyne level controlled to be above 50;
S5: Applying the first adhesive layer (201) on the decorative layer (2), or applying the first adhesive layer (201) on the back surface of the wear-resistant layer (3), and then thermally pressing the substrate (1) and the wear-resistant layer (3) together;
S6: Allowing the assembly to stand for more than 36 hours.

2. The preparation method according to claim 1, **characterized in that** the cleaning agent is dichloromethane.

3. The preparation method according to claim 1, **characterized in that** the pre-formed wear-resistant layer is selected from one of PET, PETG, ASA, PC, and PMMA, or a mixed resin formed from any of these resins.

4. The preparation method according to claim 1, **characterized in that** the matrix resin of the foamed core (11) and the thermoplastic shell (13) is polyolefin/polyvinyl chloride.

5. The preparation method according to claim 1, **characterized in that** the layered reinforcement body (12) is formed by impregnating a reinforcing fiber mesh fabric with resin.

6. A method for preparing an enhanced film-coated flooring, wherein the enhanced film-coated flooring comprises:
a substrate (1), comprising:
a foamed core (11) formed from foam plastic,
a thermoplastic shell (13) covering the foamed core, and
a layered reinforcement body (12) disposed between the foamed core (11) and the thermoplastic shell (13);
a decorative layer (2), covering the substrate;
a pre-formed wear-resistant layer (3), covering the decorative layer for protective purposes;
a first adhesive layer (201), disposed between the decorative layer and the pre-formed wear-resistant layer, having a molecular structure with repeating urethane segments;
wherein the decorative layer (2) comprises a pre-formed carrier film (21') and a pattern layer (22) disposed on the pre-formed carrier film, and the pre-formed carrier film is connected to the substrate (1) via a second adhesive layer (202);
**characterized in that** the preparation method comprises the following steps:
S1: Providing the substrate (1) and the pre-formed wear-resistant layer (3);
S2: Applying a cleaning agent on the surface of the substrate (1) to treat lubricating wax on the substrate surface, followed by corona treatment;
S3: Providing the pre-formed carrier film (21'), performing corona treatment on both sides of the carrier film, with the dyne level controlled to be above 46;
S4: Printing a pattern on the carrier film using an industrial printer to form the decorative layer (2);
S5: Applying the second adhesive layer (202) on the substrate (1), or applying the second adhesive layer (202) on the back surface of the decorative layer (2), and then thermally pressing the decorative layer (2) and the substrate (1) together;
S6: Allowing the assembly to stand for more than 16 hours;
S7: Performing corona treatment on the pre-formed wear-resistant layer (3), with the dyne level controlled to be above 50;
S8: Applying the first adhesive layer (201) on the decorative layer (2), or applying the first adhesive layer (201) on the back surface of the wear-resistant layer (3), and then thermally pressing the substrate (1) and the wear-resistant layer (3) together;
S9: Allowing the assembly to stand for more than 36 hours.

7. The preparation method according to claim 6, **characterized in that** the cleaning agent is dichloromethane.

8. The preparation method according to claim 6, **characterized in that** the pre-formed wear-resistant layer is selected from one of PET, PETG, ASA, PC, and PMMA, or a mixed resin formed from any of these resins.

9. The preparation method according to claim 6, **characterized in that** the matrix resin of the foamed core (11) and the thermoplastic shell (13) is polyolefin/polyvinyl chloride.

10. The preparation method according to claim 6, **characterized in that** the layered reinforcement body (12) is formed by impregnating a reinforcing fiber mesh fabric with resin.
